# EUROPEAN PATENT APPLICATION

(11) **EP 2 677 220 A1**
(43) Date of publication of application: **25.12.2013**
(21) Application number: 12172688.9
(22) Date of filing: 20.06.2012
(51) Int. Cl.: F16L 9/12, B29C 65/06, B32B 1/08, B32B 27/34, B60H 1/00

(54) **Pipe for the transportation of a coolant of an air conditioning system and pipe arrangement**

(71) Applicant: TI Automotive Engineering Centre (Heidelberg) GmbH, 69123 Heidelberg (DE)
(72) Inventor: Kempf, Dominik, 60318 Frankfurt (DE); Laule, Wolfgang, 68799 Reilingen (DE); Otters, Jochen, 69469 Weinheim (DE); Tilders, Benno, 67346 Speyer (DE); Zimmer, Werner, 34212 Melsungen (DE)
(74) Representative: Reiser & Partner

(57) **Abstract**

Pipe (1) for the transportation of a coolant of an air conditioning system, wherein the pipe (1) is formed from plastic and the wall (2) of the pipe (1) comprises several layers (3), wherein the layers (3) are formed from a thermoplastic material, and a pipe arrangement (4) for the transportation of a coolant of an air conditioning system, comprising a pipe (1) and at least one further element (5), wherein the pipe (1) and the further element (5) are connected with one another in a materially bonded manner, and a method for the production of the pipe arrangement (4).

## Description

The invention relates to a pipe for the transportation of a coolant of an air conditioning system, wherein the pipe is formed from plastic and the wall of the pipe comprises several layers, a pipe arrangement for the transportation of a coolant of an air conditioning system, comprising a pipe and at least one further element, and a method for the production of the pipe arrangement.

An air conditioning system comprises several components, for example a compressor and a condenser, which are connected with one another by means of pipelines. The pipelines are exposed here to high or also very low pressures, and must be designed such that no loss of coolant can take place by permeation or similar processes. Furthermore, the pipelines are to prevent the transmission of vibrations between the components. Mobile air conditioning systems, for example those which are mounted in vehicles, must, moreover, be constructed so as to save weight and be cost-efficient.

From EP 1 498 672 it is known to produce a pipe for the transportation of coolant from a thermoplastic material, wherein the pipe is constructed having a single layer. In this configuration, the disadvantage exists that the permeation tightness can not be guaranteed, so that loss of coolant can occur.

From EP 0 857 570 it is known to construct a pipe for the transportation of coolant with several layers, wherein one layer consists of thermoplastic material and a further layer consists of an elastomeric material. In this configuration, it is advantageous that the permeation tightness can be guaranteed, so that the risk of the loss of coolant is reduced. A disadvantage, however, is that the production of the pipe is complex due to the combination of thermoplastic and elastomeric materials.

The invention is based on the problem of further developing the pipe such that it is able to be produced simply and cost-efficient with high permeation tightness.

This problem is achieved by the features of Claims 1, 8 and 15. The subclaims relating thereto respectively relate to advantageous embodiments.

To achieve the problem, the layers are formed from a thermoplastic material. Thermoplastic materials enable the production of pipes with simple means; for example, the pipe can be produced by extrusion, wherein the production of a multi-layered pipe is possible in one operation by means of co-extrusion. It has been found that thermoplastic materials are basically permeation-tight with respect to the materials used in air conditioning systems. However, due to manufacture, the layer can have imperfections, for example cavities, which reduce the permeation tightness. This is irrespective of the thickness of the layer, because with an increasing thickness the extent of the imperfections also increases. If, however, several layers of thermoplastic material are arranged one over another, it is increasingly more unlikely with an increasing number of layers that the imperfections of individual layers come to be congruent, so that the permeation tightness increases with an increasing number of layers. It has been found to be particularly advantageous here to construct the pipe from six layers of thermoplastic material. A pipe with six layers has a particularly high permeation tightness with, at the same time, a good producibility.

The layers can be formed from a polyamide. Polyamides are partially crystalline thermoplastic polymers and are distinguished by a high strength, rigidity and durability. They also possess a good resistance with respect to chemicals, in particular with respect to the media of an air conditioning system. In addition, polyamides have a good processibility; for example, polyamides can be processed by means of injection moulding and extrusion. Preferably, Polyamide 12 (PA 12, polylauryl-lactam) is used. PA12 is characterized by a particularly low water absorption. Thereby, no water can penetrate via the pipe into the air conditioning system and damage the compressor there. Furthermore, PA 12 is resistant with respect to the media used in an air conditioning system, for example coolant and air conditioning oils. Further advantages are the high impact resistance, in particular at low temperatures, and a noise- and vibration damping due to the material.

At least one of the layers can be pretreated and/or aftertreated. In particular, a pre-or aftertreatment of at least one of the layers with ionizing radiation comes into consideration. Counted as ionizing radiation is any radiation which can remove electrons from atoms or molecules, so that ions or molecule residues remain behind, for example gamma radiation. These reactive particles react in the pretreatment with the polymers of the thermoplastic material such that a polymer network forms in the matrix of the material, which improves the permeation tightness. The improvement to the permeation tightness occurs without an additional agent having to be added to the material. In the crosslinking by means of ionizing radiation, it is particularly advantageous that this takes place without the action of pressure or temperature, so that the particles which are supplied for the crosslinking retain their shape during the irradiation and remain inherently stable after the crosslinking.

Alternatively or additionally, at least one of the layers can be provided with an additive. In particular, it is conceivable that the additive is linked into the matrix of the material by means of grafting. By grafting, the additive is linked to the polymers of the thermoplastic material and is thereby integrated in a particularly stable manner. The additive is preferably selected such that particular material characteristics improve, such as the permeation tightness with respect to particular media. It is advantageous in particular here that individual layers can be provided with differing additives. Consequently, additives which are incompatible with one another can also be integrated into the pipe, wherein each layer can have specialized advantageous characteristics.

The layers can be produced by means of extrusion. Several layers can be produced by co-extrusion in one operating step. Pipes can be produced simply and at a favourable cost by extrusion. Co-extrusion enables the production of multi-layered pipes in one operation.

The pipe can be at least partially corrugated. A corrugated pipe has sections with a smaller diameter and sections with a larger diameter. Through this geometry, an improved flexibility of the pipe and an improved damping behavior are produced.

The pipe can be at least partially bent. Thereby, likewise, the damping behavior and the flexibility of the pipe improve. Moreover, complex geometries can be realized.

The pipe can have at least partially a non-circular cross-section. For example, the pipe can be constructed so as to be partially oval or flattened. This geometry enables the production of tight radii and particularly complex pipe geometries.

The pipe arrangement according to the invention for the transportation of a coolant of an air conditioning system comprises at least one pipe according to the invention and at least one further element, wherein the pipe and the further element are connected with one another in a materially bonded manner. Hitherto, connections between elements and plastic pipes of an air conditioning system were produced by metallic connecting elements which are connected with the pipe by shaping in a force-/form-fitting manner. It is disadvantageous here that the connection is complex to produce and, moreover, is relatively cost-intensive owing to the use of metallic elements. Materially bonded connections, in contrast, are simple to produce, wherein it has been surprisingly found that the connection is robust and also withstands the high pressures prevailing in an air conditioning system. A materially bonded connection produced by welding is particularly preferred, because this does not require any additive whatsoever and can be monitored simply.

The pipe and the further element can be connected with one another by means of friction welding. Rotation welding is particularly preferred here. In friction welding, two parts are moved relative to one another, wherein the parts touch one another at the contact surfaces. Through the resulting friction, the heating and plastification of the material is brought about, so that the materials of the pipe and of the further element penetrate one another at least partially, so that the pipe and the further element adjoin one another securely and are connected with one another in a materially bonded manner.

In rotation welding, at least one joining part in the joining zone must have a rotationally symmetrical shape, which is the case with regard to the pipe. The energy supply is introduced exclusively by a relative movement of the joining parts with respect to one another under pressure. In so doing, one joining part is stationary and the second part is set in rotation. The method is simple and favourably priced and enables the production of permeation-tight connections without additives or metallic insert parts or connecting elements.

The at least one further element can be constructed as a further pipe, as a fitting, as a flange or as a coupling. Through additional elements, a complex pipe geometry consisting of pipes, couplings, fittings, flanges and suchlike can be produced and prefabricated. The pipe geometry can be adapted here by simple means to the space requirement and the arrangement of the air conditioning system components. The elements are preferably by means of friction welding here, avoiding additives and additional assembly elements.

The pipe and the further pipe can be pre-shaped three-dimensionally and connected at their ends in a materially bonded manner with one another to the pipe arrangement. Thereby, a complex pipe geometry is produced for mounting in difficult structural spaces. By the connection of several pre-bent pipe sections, the production of a particularly complex pipe arrangement is possible.

A service connection can be integrated into the further element, for example a valve for emptying or filling the air conditioning system. Air conditioning systems are provided with a service connection for the exchange of the coolant. Maintenance equipment can be connected to these, which automatically exchange the coolant. Hitherto, these service connections are integrated into the pipe system and are manufactured from metallic material. In an advantageous embodiment, however, the service connections are integrated into a block which is manufactured from plastic, which is connected with the pipe in a materially bonded manner. In this embodiment, the advantage results of simple producibility and low weight.

The further element can be constructed and connected with the pipe such that the inner cross-section of the pipe arrangement corresponds at least to the inner cross-section of the pipe. Such an element has an insertion opening, the diameter of which corresponds to the outer diameter of the pipe. The pipe is inserted into this insertion opening and is connected in a materially bonded manner with the element. The passage opening through which the coolant is directed through the element has a diameter which corresponds to the inner diameter of the pipe. Through this configuration, a stable connection of pipe and element is produced with a constant flow cross-section.

A sound absorber can be arranged into the pipe or into the further element. The sound absorber can either be a separate structural element constructed as an insert, or can be constructed in one piece from the further element. It is also conceivable that a separate element is provided, constructed as a sound absorber, which is integrated into the pipe arrangement. Through the sound absorber, the noise emission brought about by the air conditioning system is reduced. The sound absorber is preferably constructed from plastic, for example from PA 12.

The method according to the invention for the production of the pipe arrangement according to the invention comprises the steps of producing a multi-layered pipe by co-extrusion of a thermoplastic material, introducing curves into the pipe by heating and bending, and connecting of at least one further element at the free end of the pipe by friction welding. The method is characterized by the simple joining of the elements of the pipe arrangement and their simple and materially bonded connection, avoiding additives and additional elements, in particular metallic additional elements. By the joining of several elements, complex pipe geometries can be produced as prefabricated elements.

Some example embodiments of the pipe according to the invention and of the pipe arrangement according to the invention are described in further detail below with the aid of the figures. These show, diagrammatically respectively:
- Fig. 1: the pipe;
- Fig. 2: the pipe arrangement.

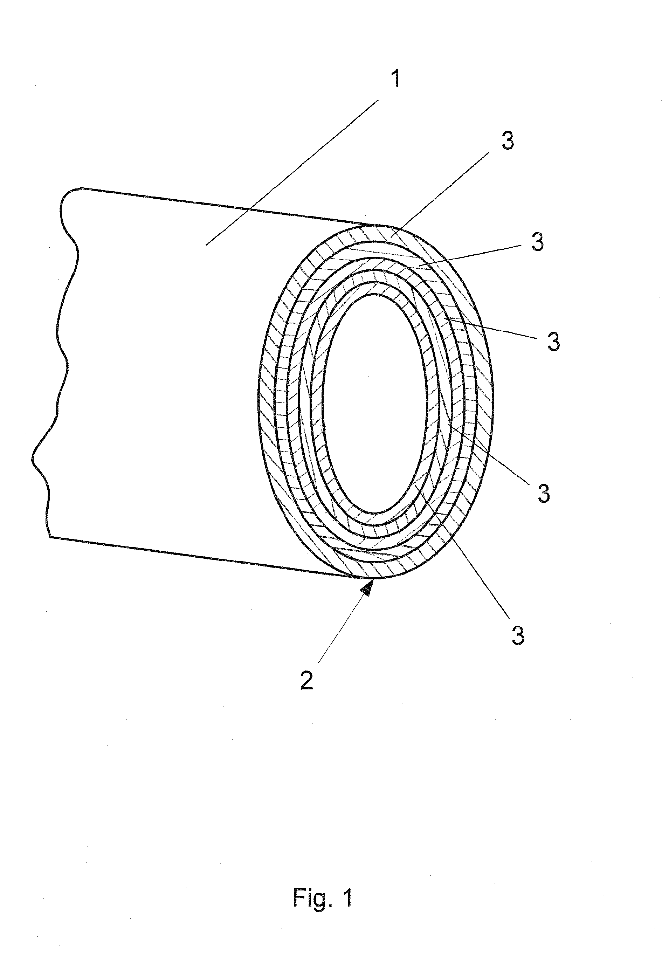

Figure 1 shows a pipe 1 for the transportation of a coolant of an air conditioning system, wherein the air conditioning system is constructed as a mobile system of a vehicle. The pipe 1 is formed from plastic, in this embodiment a thermoplastic material, preferably polyamide, particularly preferably Polyamide 12 (PA 12). The wall 2 of the pipe 1 comprises several layers 3, in this embodiment six layers, which are arranged concentrically to one another. Each of the layers 3 is formed from a thermoplastic material.

To improve the permeation tightness, at least one of the layers 3 is pretreated by means of ionizing radiation, preferably gamma radiation.

The layers 3 of the pipe 1 are produced by means of extrusion, wherein for the production of concentrically arranged layers 3, the layers 3 are produced by co-extrusion.

To improve the flexibility, the pipe 3 is constructed so as to be partially corrugated, wherein protruding sections are produced by the pipe 1 being inserted into a tool and a vacuum being produced there in parts. Intruding sections are produced by these sections being pressed in by means of a tool.

For the production of changes in direction and complex geometries, the pipe 3 is partially bent, wherein for the production of particularly tight radii, the pipe 3 has in these sections a non-circular, preferably flattened or oval cross-section.

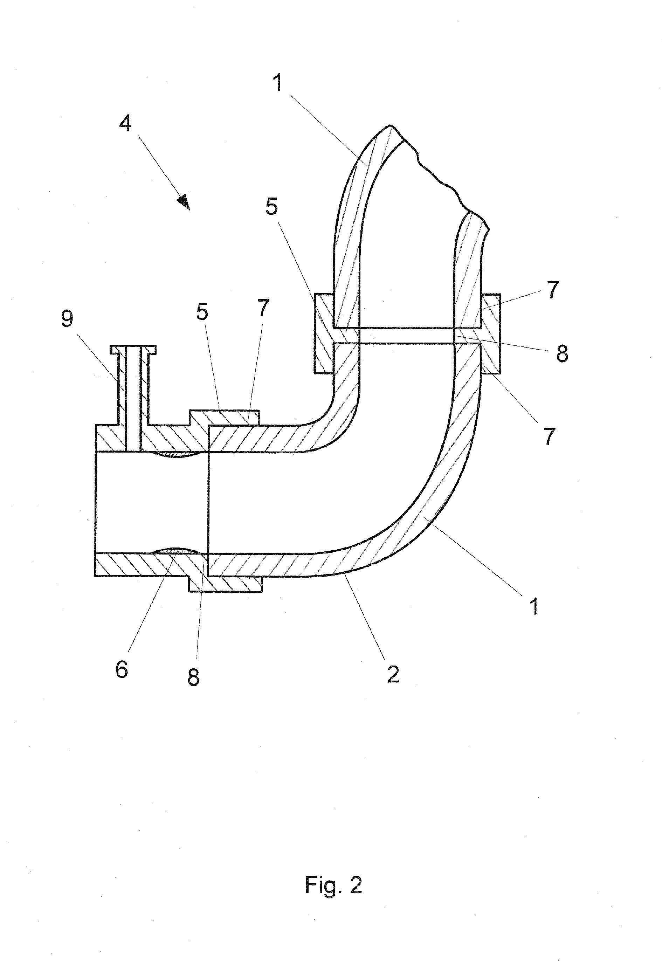

Figure 2 shows a pipe arrangement 4 for the transportation of a coolant of an air conditioning installation. The pipe arrangement 4 comprises several three-dimensionally preformed pipes 1 with differing geometry, and further elements 5 which in this embodiment are constructed as a flange and as a muffle. The pipes 1 and the further elements 5 constructed as a flange and as a muffle are connected with one another in a materially bonded manner by means of friction welding.

In one further element 5, constructed as a flange, a service connection 9 is integrated which permits the exchange of the coolant of the air conditioning system.

The further elements 5, constructed as a flange and as a muffle, are constructed and are connected with the pipe 1 such that the inner cross-section of the pipe arrangement corresponds to the inner cross-section of the pipe 1. For this, the further elements 5 have an insertion opening 7, the diameter of which corresponds to the outer diameter of the pipe 1. The insertion opening 7 opens into a passage opening 8, the diameter of which corresponds to the inner diameter of the pipe 1. In the region of the insertion opening 7, the pipe 1 is connected in a materially bonded manner with the further element 5. A sound absorber 6 is arranged in the further element 5, wherein the sound absorber 6 consists of thermoplastic material. Alternatively, the sound absorber can be arranged in the pipe 1 or can form a separate further element 5.

In other embodiments, the at least one further element 5 is constructed as a further pipe, as a fitting, as a flange or as a coupling and is respectively connected in a materially bonded manner with the pipe 1.

For the production of the pipe arrangement 4, firstly a multi-layered pipe 1 is produced by means of co-extrusion from thermoplastic material. This prefabricated pipe 1 is then brought into a three-dimensional shape by heating and bending on a device, wherein the pipe 1 can be partially flattened and curves can be introduced. Further elements 5 are fastened to the pipe by friction welding. These further elements 5 can be constructed as a pipe, fitting, flange or coupling. The further elements 5, like the pipe 1, consist of thermoplastic material.

## Claims

1. A pipe (1) for the transportation of a coolant of an air conditioning system,
wherein the pipe (1) is formed from plastic and the wall (2) of the pipe (1) comprises several layers (3), **characterized in that** the layers (3) are formed from a thermoplastic material.

2. The pipe according to Claim 1, **characterized in that** the layers (3) are formed from a polyamide.

3. The pipe according to Claim 1 or 2, **characterized in that** at least one of the layers (3) is pretreated and/or aftertreated.

4. The pipe according to one of Claims 1 to 3, **characterized in that** the layers (3) are produced by means of extrusion.

5. The pipe according to one of Claims 1 to 4, **characterized in that** the pipe (3) is at least partially corrugated.

6. The pipe according to one of Claims 1 to 5, **characterized in that** the pipe (3) is at least partially bent.

7. The pipe according to one of Claims 1 to 6, **characterized in that** the pipe (3) has at least partially a non-circular cross-section.

8. A pipe arrangement (4) for the transportation of a coolant of an air conditioning system, comprising at least one pipe (1) according to one of the preceding claims and at least one further element (5), **characterized in that** the pipe (1) and the further element (5) are connected with one another in a materially bonded manner.

9. The pipe arrangement according to Claim 8, **characterized in that** the pipe (1) and the further element (5) are connected with one another by means of friction welding.

10. The pipe arrangement according to Claim 8 or 9, **characterized in that** the at least one further element (5) is constructed as a further pipe, as a fitting, as a flange or as a coupling.

11. The pipe arrangement according to Claim 10, **characterized in that** the pipe and the further pipe are preformed three-dimensionally and are connected at their ends in a materially bonded manner with one another to the pipe arrangement (4).

12. The pipe arrangement according to one of Claims 8 to 11, **characterized in that** a service connection is integrated into the further element (5).

13. The pipe arrangement according to one of Claims 8 to 12, **characterized in that** the further element (5) is constructed and is connected with the pipe (1) such that the inner cross-section of the pipe arrangement corresponds at least to the inner cross-section of the pipe (1).

14. The pipe arrangement according to one of Claims 8 to 13, **characterized in that** a sound absorber (6) is arranged into the pipe (1) or into the further element (5).

15. A method for the production of a pipe arrangement (4) according to one of the preceding claims, **characterized by** the steps of producing a multi-layered pipe (1) by co-extrusion of a thermoplastic material, introducing curves into the pipe (1) by heating and bending, and connecting at least one further element at the free end of the pipe (1) by friction welding.
